# EUROPEAN PATENT APPLICATION

(11) **EP 1 781 057 A1**
(43) Date of publication of application: **02.05.2007**
(21) Application number: 05023425.1
(22) Date of filing: 26.10.2005
(51) Int. Cl.: H04Q 7/38

(54) **Fast radio bearer establishment in a mobile communication system**

(71) Applicant: MATSUSHITA ELECTRIC INDUSTRIAL CO., LTD., Kadoma-shi, Osaka 571-8501 (JP)
(72) Inventor: Petrovic, Dragan, 64295 Darmstadt (DE); Aoyama, Takahisa, Yokohama-shi Kanagawa 233-0007 (JP); Löhr, Joachim, 64287 Darmstadt (DE); Seidel, Eiko, 64285 Darmstadt (DE); Fukui, Akito, Yokohama-shi 224-8539 (JP)
(74) Representative: Grünecker, Kinkeldey, Stockmair & Schwanhäusser Anwaltssozietät

(57) **Abstract**

The invention relates to methods for establishing a radio bearer between a network element terminating radio resource control protocol and a mobile terminal. The invention provides RNC for establishing a radio bearer between the RNC and a mobile terminal, especially adapted mobile terminals and a system comprising the network element and at least one mobile terminal. In order to reduce the delays implied by the signaling in the procedure the invention proposes two mechanisms. The first mechanism aims at reducing the delay implied by setting up the radio link for the radio bearer by preconfiguring a pool of resources comprising a set of at least radio bearer configuration and making the available radio bearer configurations known to the mobile terminals. The second mechanism aims at avoiding the delay implied by the explicit assignment of a radio network temporary identifier by signaling a set of available identifiers from which the mobile terminal may choose an identifier.

## Description

### FIELD OF THE INVENTION

The present invention relates to methods for establishing a radio bearer between a network element in a radio access network terminating radio resource control protocol and a mobile terminal. The invention further provides network elements in a radio access network terminating radio resource control protocol, especially adapted mobile terminals and a system comprising at least one of the network elements and at least one of the mobile terminals.

### TECHNICAL BACKGROUND

W-CDMA (Wideband Code Division Multiple Access) is a radio interface for IMT-2000 system (International Mobile Telecommunication system), which was standardized for use as the 3^{rd} generation wireless mobile telecommunication system. It provides a variety of services such as voice services and multimedia mobile communication services in a flexible and efficient way. The standardization bodies in Japan, Europe, USA, and other countries have jointly organized a project called the 3^{rd} Generation Partnership Project (3GPP) to produce common radio interface specifications for W-CDMA.

The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4, Release 5 and Release 6. A discussion on further improvements is ongoing under the scope of Release 7 and Study Item on Evolved UTRA and UTRAN.

### UMTS Architecture

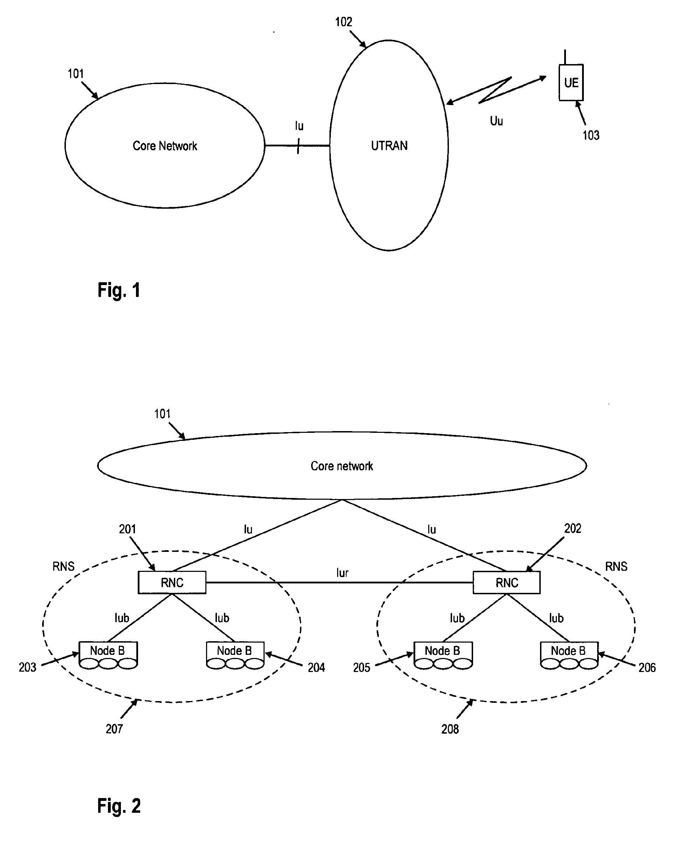

The high level Release 99/4/5 architecture of Universal Mobile Telecommunication System (UMTS) is shown in Fig. 1 (see 3GPP TR 25.401: "UTRAN Overall Description", available from http://www.3gpp.org). The UMTS system consists of a number of network elements each having a defined function. Though the network elements are defined by their respective function, a similar physical implementation of the network elements is common but not mandatory.

The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of these network elements are defined by open interfaces (lu, Uu). It should be noted that UMTS system is modular and it is therefore possible to have several network elements of the same type.

In the sequel two different architectures will be discussed. They are defined with respect to logical distribution of functions across network elements. In actual network deployment, each architecture may have different physical realizations meaning that two or more network elements may be combined into a single physical node.

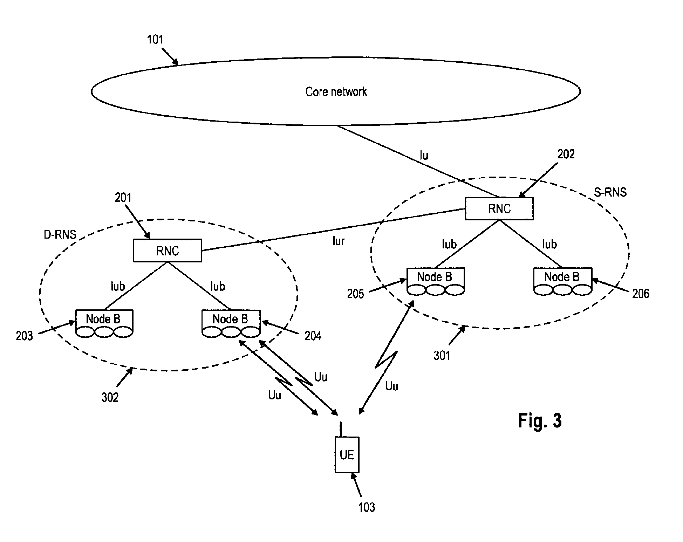

Fig. 2 illustrates the current architecture of UTRAN. A number of Radio Network Controllers (RNCs) 201, 202 are connected to the CN 101. Functionally, the RNC 201, 202 owns and controls the radio resources in its domain and typically terminates the Radio Resource Control protocol on the access network side. Each RNC 201, 202 controls one or several base stations (Node Bs) 203, 204, 205, 206, which in turn communicate with the user equipments. An RNC controlling several base stations is called Controlling RNC (C-RNC) for these base stations. A set of controlled base stations accompanied by their C-RNC is referred to as Radio Network Subsystem (RNS) 207, 208. For each connection between User Equipment and the UTRAN, one RNS is the Serving RNS (S-RNS). It maintains the so-called lu connection with the Core Network (CN) 101. When required, the Drift RNS 302 (D-RNS) 302 supports the Serving RNS (S-RNS) 301 by providing radio resources as shown in Fig. 3. Respective RNCs are called Serving RNC (S-RNC) and Drift RNC (D-RNC). It is also possible and often the case that C-RNC and D-RNC are identical and therefore abbreviations S-RNC or RNC are used. Commonly, a Drift RNS 302 is used for soft handovers of UEs between different RNS.

### General Description of the Protocol Model of the UTRAN Terrestrial Interfaces

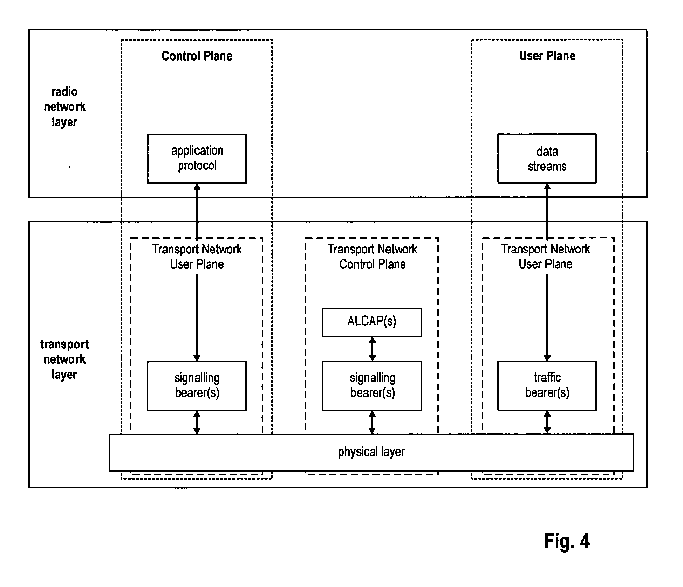

Fig. 4 shows an overview of the protocol model of the UTRAN in an UMTS network. For a better understanding, only a brief description is provided herein; further details may be found in Holma et al., "WCDMA for UMTS", Third Edition, Wiley & Sons, Inc., October 2004, Chapter 5.

On the horizontal plane, the protocol model can be split into the radio network layer and the transport network layer. All UTRAN-related issues are visible and handled on the radio network layer, while transport network layer typically represents standard transport technology that is selected to be used for data transport for the UTRAN without any UTRAN-specific changes.

On the vertical plane, the protocol model can be split into control plane and user plane. The control plane is used for UMTS-specific control signaling (i.e. radio network layer related control signaling) and includes the Application Protocol (AP), e.g. RANAP on the lu interfaces, RNSAP on the lur interfaces, NBAP on the lub and RRC on Uu interfaces. The control plane functions and Application Protocol allows setting up traffic radio bearers to the UEs via so-called signaling radio bearers.

While the control plane protocols are responsible for the UMTS-specific control signaling, the user plane transports the data streams sent by and sent to the users, such as voice calls, streaming data, packets of packet-switched services, etc. For transport, the user plane contains the so-called traffic radio bearers (also sometimes referred to as Data Bearers).

The transport network control plane is used for control signaling within the transport network layer and does not include any radio network layer related information. The transport network control plane includes the ALCAP protocol, which is used to set up the traffic radio bearers for exchanging user plane information and the signaling radio bearers required for communicating ALCAP protocol messages. Due to the presence of the transport network control plane, it is possible that the Application Protocol within the control plane may operate completely independent from the technology selected for data transport on the traffic radio bearers in the user plane. The transport network control plane controls the operation of the transport network user plane.

### UTRA Radio Interface Protocol architecture

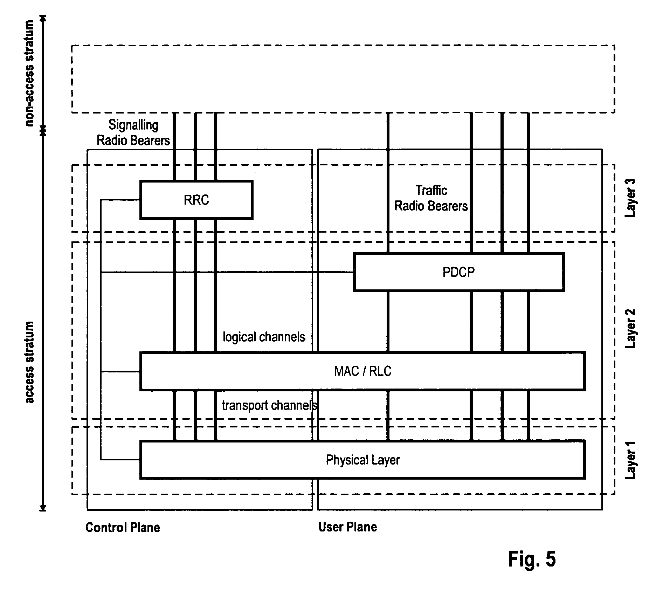

An overview of the radio interface protocol architecture of the UTRAN is shown in Fig. 5. Generally, the radio interface protocol architecture of the UTRAN implements Layers 1 to 3 of the OSI protocol stack. The protocols terminated in the UTRAN are also referred to as the access stratum (protocols). In contrast to the access stratum, all protocols not terminated in the UTRAN are typically also referred to as the non-access stratum protocols.

As has been discussed with respect to Fig. 4, the vertical split of the protocols into user plane and control plane is illustrated. The Radio Resource Control (RRC) protocol is a Layer 3 protocol of the control plane which controls the protocols in the lower layers of the UTRA Radio Interface (Uu).

The RRC protocol is typically terminated in the RNC of the UTRAN, however other network elements have also been considered for terminating the RRC protocol in the UTRAN, e.g. the Node Bs. The RRC protocol is used for signaling of control information to control access to radio resources of the radio interface to the UEs. Further, there is also the possibility that the RRC protocol encapsulates and transports non-access stratum protocol messages, which are usually related to control within the non-access stratum protocol.

In the control plane, the RRC protocol relays the control information to Layer 2, i.e. the Radio Link Control (RLC) protocol, via signaling radio bearers through Service Access Points (SAPs). In the user plane the non-access stratum protocol entities may use traffic radio bearers to directly access Layer 2 via SAPs. The access may be made to the RLC directly or to the Packed Data Convergence Protocol which in turn provides its PDUs to the RLC protocol entity.

The RLC offers the SAPs to the higher layers. The SAPs define how RLC will handle the packets, e.g. whether RLC is operating in transparent, acknowledged or unacknowledged mode. The services provided to the higher layers in the control plane and user plane by the RRC or PDCP are also referred to as signaling radio bearer and traffic radio bearer, respectively.

The MAC/RLC layer in turn offers its services to the RLC layer by means of so-called logical channels. The logical channels essentially define what kind of data is transported. The physical layer offers its services to the MAC/RLC layer, the so-called transport channels. The transport channels define how and with which characteristics the data received from the MAC layer are transmitted via the physical channels.

### Logical and Transport Channels in UTRAN

In this section the mapping between relevant logical channels and transport channels will be outlined. The mapping of logical channels to transport channels may be utilized for some of the signaling messages within a RRC connection establishment procedure.

The characteristics and mapping of relevant logical and transport channels for UTRA and E-UTRA are summarized in the following tables. Logical channels are mainly described by data type to be transmitted whereas transport channels are mainly described by respective transmission types and identification method.

The table below contains a description of logical and transport channels for UTRA and E-UTRA, respectively.

| ***Logical (LCH) or Transport Channel (TrCH) type vs. channel characteristic and mapping*** | | ***Channel characteristic*** | | | | ***Mapping (LCH* -> *TrCH)*** |
|---|---|---|---|---|---|---|
| | | ***Data Type*** | ***Transmission* Type** | ***Direction: Uplink (UL) or Downlink (DL)*** | ***Identification method*** | |
| | BCCH (Broadcast Control CHannel) | system information (broadcast) | N/A | DL | N/A | BCCH -> BCH |
| ***L C H*** | CCCH (Common Control CHannel) | common service control (unicast) | N/A | UL or DL | N/A, Note: this logical channel is mainly used for transmission of control plane information prior to identifier assignment to UE by radio access network | CCCH -> FACH, RACH |
| | DCCH (Dedicated Control CHannel) | dedicated service control (unicast) | N/A | UL or DL | N/A | DCCH -> FACH, RACH, DCH |
| ***T r C H*** | BCH (Broadcast CHannel) | N/A | Common channel with static configuration | DL | N/A due to broadcast data type | N/A |
| | FACH (Forward Access CHannel) | N/A | Common channel with semi-static configuration | DL | Layer 2 inband when carrying DCCH, N/A otherwise | N/A |
| | RACH (Random Access CHannel) | N/A | Common channel with semi-static configuration and contention-based access | UL | Layer 2 inband when carrying DCCH, N/A otherwise | N/A |
| | DCH (Dedicated CHannel) | N/A | Dedicated channel with semi-static configuration | UL or DL | N/A since this is dedicated transport channel | N/A |

Please note that mapping of DCCH in the table above may be possible on a Fractional Dedicated Channel in downlink direction for UMTS Release 6 and on Enhanced Dedicated Transport Channel in uplink for UMTS Release 6 of the Evolved UTRA. These options have however not been considered in the table for the sake of simplicity.

For UTRA, identification of transport channels in shown in the table above is Layer 2 inband. Layer 2 inband identification means that header of a Layer 2 MAC PDU contains UE identifier pointing at a specific UE as a destination or source of information for downlink or uplink direction, respectively. Consequently, for mapping of logical channels containing data of system information and common service control type identification is not needed. Identification is applicable only to common transport channels (RACH and FACH) apart from broadcast common transport channel (BCH).

The following table shows an exemplary description of logical channels and transport channels in the Evolved UTRA (E-UTRA).

| | | ***Channel characteristic*** | | | | ***Mapping*** |
|---|---|---|---|---|---|---|
| ***Logical (LCH) or Transport Channel (TrCH) type vs. channel characteristic and mapping*** | | ***Data Type*** | ***Transmis sion Type*** | ***Direction: Uplink (UL) or Downlink (DL)*** | ***Identification method*** | ***(LCH* -> *TrCH)*** |
| | BCCH (Broadcast Control CHannel) | system information (broadcast) | N/A | DL | N/A | BCCH -> Evolved- BCH |
| ***L C H*** | CCCH (Common Control CHannel) | common service control (unicast) | N/A | UL or DL | N/A, Note: this logical channel is mainly used for transmission of control plane information prior to identifier assignment to UE by radio access network | CCCH -> SDCH (in downlink direction only), CACH |
| | DCCH (Dedicated Control CHannel) | dedicated service control (unicast) | N/A | UL or DL | N/A | DCCH-> SDCH, SUCH |
| | Evolved-BCH (Evolved Broadcast CHannel) | N/A | Common channel with static configuration | DL | N/A due to broadcast data type | N/A |
| ***T r C H*** | CACH (Contention Access CHannel) | N/A | Common channel with semi-static configuration and contention-based access | UL | Layer 2 inband when carrying DCCH, N/A otherwise | N/A |
| | SDCH (Shared Downlink CHannel) | N/A | Shared channel with dynamic configuration and scheduled access | DL | Layer 1 outband | N/A |
| | SUCH (Shared Uplink CHannel) | N/A | Dedicated channel with semi-static configuration | UL | Layer 1 outband | N/A |

It can be noted that legacy FACH is not used and that shared channels are used instead of legacy DCH. It is assumed that associated physical channels in downlink direction are used for both SDCH and SUCH. An example of associated physical channel could be Shared Control Signaling CHannel (SCSCH).

The transmission types description in the respective column of the table above should be understood as follows. A static configuration means that the transport format attributes of the channel, e.g. modulation, forward error correction scheme etc. are system-specific and are not subject to change by the network. In a semi-static configuration the transport format attributes of the channel, e.g. modulation, forward error correction scheme etc. are subject to change by reconfiguration procedure. The procedure is fairly slow introducing latency of the order of 100 ms. Finally, in a dynamic configuration the transport format attributes of the channel, e.g. modulation, forward error correction scheme etc. are subject to change by signaling on associated control channels. The procedure is fairly fast relative to semi-static reconfiguration and may introduce a delay of the order of several sub-frames (1 sub-frame ~ 100 ms). Dynamic configuration may be carried out so as to optimally match transmission format to temporal variations of radio channel in which case it may be referred to as link adaptation.

Information that may be transmitted by this channel is given in the table below:

| | Control signaling for downlink | Control signaling for uplink |
|---|---|---|
| Physical control | ➢ Demodulation | ➢ Transmission power control bits |
| | • Chunk allocation information | ➢ Transmission timing control bits |
| | • Data modulation | ➢ ACK/NACK bit for the reservation channel and fast access channel |
| | • Transport block size | |
| L2 control | ➢ Scheduling | ➢ Scheduling |
| | • UE identity | • UE identity |
| | ➢ H-ARQ | • Chunk allocation information |
| | • H-ARQ process information | • Data modulation |
| | • Redundancy version | • Transport block size |
| | • New data indicator | ➢ H-ARQ |
| | | • ACK/NACK |

It can be seen from the table that UE identification information is contained in both downlink and uplink directions. Thus, by virtue of Layer 1 outband identification, it is only after decoding of SCSCH and after finding out that identifier transmitted on the physical channel corresponds to the identifier assigned to the UE during the RRC connection establishment procedure that the UE can receive physical channels on which respective shared transport channels are mapped and further process Layer 2 PDUs (Protocol Data Units) corresponding to SDCH and SUCH shared transport channels. Identification for CACH transport channel is analogous to the identification for RACH transport channel in E-UTRA. Finally it can be concluded that identification is applicable to common and shared transport channels (CACH, SDCH and SUCH) apart from evolved broadcast common transport channel (Evolved-BCH). Identification for said common transport channels is of L2 inband type, while the identification for shared transport channels is of Layer 1 outband type.

From the definitions of "Layer 2 inband" and "Layer 1 outband" identification one could infer that there is one and only one identifier per UE. Hence, once a Signaling Radio Bearer has been established, the UE has been assigned identifier that can be used for Traffic Radio Bearer as well. However, it is possible that multiple identifiers per UE are defined and used.

### Radio Resource Control Protocol State Model in UTRAN and Evolved UTRAN

The explanation in this subsection is applicable once UMTS Attach procedure (registration) has been performed.

### Radio Resource Control Protocol State Model in UTRA

The Radio Resource Control protocol in UTRA has two modes, idle mode and connected mode, and four service states (URA_PCH, Cell_PCH, Cell_FACH and Cell_DCH). A UE is in idle mode, if no RRC connection has been established. It is in connected mode once RRC connection has been established, i.e. after sending a RRC Connection Setup Complete message to the RNC.

In the following, a brief explanation of each of the states is provided from the aspect of transport channels that can be received, location management and UE identification.

In the Cell_DCH state of the RRC connected mode, a dedicated transport channel (DCH) is allocated to UE and the UE is known by its serving RNC on a cell level. RRC connection mobility is managed by Active Set Update or Hard Handover function. It should be noted that high speed downlink shared transport channel (HS-DSCH) and enhanced dedicated transport channel (EDCH) can be allocated to UE in Cell_DCH from Rel5 and Rel6 respectively.

In the Cell_FACH state of the RRC connected mode, FACH and RACH transport channels can be used for downlink and uplink transmission and cell reselection is used for managing RRC connection mobility. Location of the UE on cell level is reported to the network by Cell Update function.

In the Cell_PCH state of the RRC connected mode, UE can be reached only via the paging channel (PCH). When wishing to perform a cell reselection while being in Cell_PCH state, UE will autonomously transit to Cell_FACH state and return to Cell_PCH state after completing the procedure if no other activity has been detected.

In the URA_PCH state of the RRC connected mode, UE can be reached only via the paging channel (PCH). When wishing to perform a cell reselection while being in URA_PCH state, UE will autonomously transit to Cell_FACH state and return to URA_PCH state after completing the procedure if no other activity has been detected.

### UE identification

In the following UE identifiers used for Layer 2 inband identification of FACH and RACH transport channels are described (see also 3GPP TS 25.321, "Medium Access Control (MAC) protocol specification (Release 6)", version 6.6.0, available at http://www.3gpp.org). These identifiers (RNTI = radio network temporary identifier) are allocated once a UE enters RRC connected mode in a service state in which transport channels to which respective identification is applicable can be received.
■ S-RNTI is an identifier allocated by SRNC and unique within SRNC,
■ C-RNTI is an identifier allocated by CRNC and unique within cell and
■ U-RNTI is an identifier obtained as a combination of SRNTI and SRNC ID. It is unique within UTRAN.

Further, the following UE identifiers used for Layer 1 outband identification of HS-DSCH and E-DCH are described 3GPP TS 25.331 "Radio Resource Control (RRC) Protocol Specification", version .6.6.0, chapter 13.4.8o and 10.3.3.10a:
■ H-RNTI is an identifier allocated by SRNC and it is unique within SRNC controlling serving HS-DSCH cells and
■ Primary and secondary E-RNTI are identifiers allocated by Node B controlling serving E-DCH cell and are unique within that cell.

The UE variables storing the values of assigned identifiers are cleared once the UE leaves RRC connected mode. The variables are named after corresponding identifiers as S_RNTI, C_RNTI, U_RNTI, H_RNTI and Primary/Secondary E_RNTI respectively.

### Radio Resource Control Protocol State Model in the Evolved UTRAN

For the presently discussed enhancements of the UTRAN, the so called Enhanced UTRAN, the following main RRC protocol states have been defined:
In the LTE_Idle RRC state no RRC connection has been established.
In the LTE_Active RRC state, a RRC connection has been established. In this state, Evolved-BCH, CACH, SDCH and SUCH transport channels may be used for broadcast, paging and data transmission in uplink/downlink direction. Location may be managed on cell/Node B level by means of a cell change or similar procedure. Identifiers for Layer 2 inband and Layer 1 outband identification of UE on respective transport channels may be assigned to the UE when entering LTE_Active RRC state and corresponding variables in the UE may be cleared once LTE_Active RRC state has been left. Precise definition of identifiers has not been formulated yet. Hence in this document, a general identifier will be referred to as LTE-RNTI.
A power saving substate wherein a UE may use discontinuous reception (DRX) cycles of the MAC protocol belonging to the LTE_Active RRC state may also be defined.

### RRC connection establishment procedure

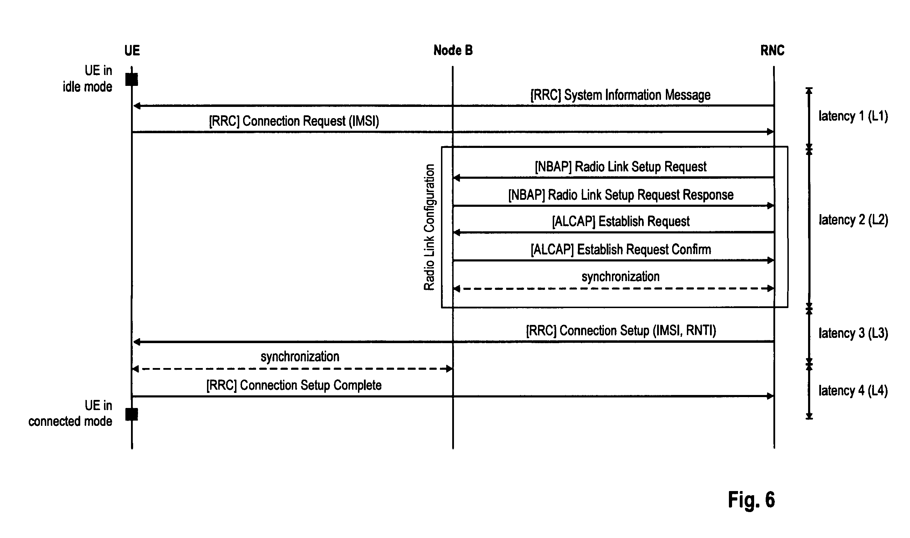

Fig. 6 illustrates a standard RRC connection establishment procedure. The RNC broadcast a System Information message via BCCH/BCH (notation: logical channel /transport channel, see tables above) to the UEs. This System Information message comprises information on e.g. secondary common control physical channel configuration, UE parameters on idle and connected mode to enable the UE to perform system access. Detailed description of the contents of the message may be found in the 3GGP TS 25.331, V.6.7.0 , section 8.1.1.

In order to begin the establishment of a signaling radio bearer the UE sends a RRC Connection Request message via CCCH/RACH to the network. Upon receiving an RRC Connection Request message, the UTRAN will proceed with configuring a radio link (Radio Link Configuration) by negotiating radio bearer, transport channel and physical channel parameters with and reserving resources at the Node B serving the UE.

If the radio link connection setup is successful, the UTRAN accepts the request and transmits an RRC Connection Setup message via CCCH/FACH to the UE. In case the radio link connection setup is not successful the RNC transmits a RRC Connection reject message to the UE. In the RRC Connection Reject message, the UTRAN may direct the UE to another UTRA carrier or to another system. After the RRC Connection Reject message has been sent, all context information for the UE may be deleted in UTRAN.

The RRC Connection Setup message is used by the network to accept the request for the establishment of an RRC connection for a UE. The message includes and assignment of a set of radio bearer information, transport channel information and optionally physical channel information.

Upon reception of the RRC Connection Setup message the UE initiates the radio bearer, transport channel and physical channel configuration in accordance with parameters set in the radio bearer, transport channel and physical channel information elements of the RRC Connection Setup Message. Typically, the UE will be in the CELL_DCH state and will proceed with performing physical layer synchronization with the Node B and enter into the RRC connected mode.

Upon having finished this procedure, the UE sends a RRC Connection Setup Complete message via DCCH/DCH to the UTRAN to confirm the establishment of the RRC connection, i.e. the signaling radio bearer.

As indicated in Fig. 6, each message exchange implies a delay for changing from RRC idle mode to RRC connected mode. The delay budget of the RRC Connection Establishment Procedure may be defined in the following way. Delays for a typical Signaling Radio Bearer Settings have been found to be roughly:
■ L1+L2+L3+L4 ≈ 441ms,
■ L2 ≈ 126 ms and
■ L3 ≈ 51 ms.

The current requirement for the latency for transition between a camped state such as the RRC idle mode (or E-UTRA LTE_ldle state) to an active state such as the Cell_DCH RRC connected mode (or E-UTRA LTE_Active state) shall be less than 100 ms. However, in current system the delay for RRC connection establishment procedure has been estimated to be 441 ms. Therefore, RRC connection establishment delay in UTRA is overly long.

### SUMMARY OF THE INVENTION

The object of the invention is to suggest an improved radio bearer establishment procedure that allows reducing the delays implied by the signaling in the procedure.

The object is solved by the subject matter of the independent claims. Advantageous embodiments of the invention are subject matters to the dependent claims.

According to different embodiments of the invention, two mechanisms for reducing the delay are suggested. The first mechanism aims at reducing the delay implied by setting up the radio link for the radio bearer in the radio bearer establishment procedure. According to this mechanism, a pool of resources comprising a set of at least radio bearer configuration is preconfigured and the available radio bearer configurations are made known to at least one mobile terminal. By means of this mechanism the contexts defining the radio bearer in the mobile terminal and the network elements may be established autonomously eliminating the need for a radio link setup procedure.

The second mechanism aims at avoiding the delay implied by the explicit assignment of a radio network temporary identifier to the mobile terminal requesting the setup of a radio bearer. According to the second mechanism, a set of available identifiers from which the mobile terminal may choose is signaled, so that no explicit assignment of the radio network temporary identifier is necessary. Both mechanisms may also be advantageously combined.

One embodiment of the invention provides a method for establishing a radio bearer between a network element in a radio access network terminating radio resource control protocol and a mobile terminal. The radio access network may signal a set of identifiers comprising at least one available radio network temporary identifier for identification of a mobile terminal to at least one mobile terminal. A connection setup request message from a mobile terminal may be received at the network element terminating the radio resource control protocol in the radio access network. The connection setup request message comprises a radio network temporary identifier selected by the mobile terminal from the set of identifiers. In response to the connection setup request message a radio bearer between the requesting mobile terminal and the network element terminating radio resource control protocol in a radio access network may be established, wherein the selected radio network temporary identifier is utilized for identifying the mobile terminal in a communication on the established radio bearer.

In a further embodiment of the invention, the connection setup request message received from the mobile terminal may also comprise a configuration identifier of a radio bearer configuration to be utilized for communication on the radio bearer to be established, wherein the radio bearer configuration is selected by the mobile terminal from a set of radio bearer configurations being each identified by a respective configuration identifier.

In a variation of this embodiment, the radio access network may preconfigure a pool of resources according to at least one set of radio bearer parameters describing individual radio bearer configurations of said set of radio bearer configurations, wherein each radio bearer configuration is associated to a configuration identifier.

Further, the radio access network may signal information on the set of radio bearer configurations and the configuration identifiers associated to the individual radio bearers of said set to at least the mobile terminal.

Another embodiment of the invention provides an alternative method for establishing a radio bearer between a network element in a radio access network terminating radio resource control protocol and a mobile terminal. According to this method, the radio access network may preconfigure a pool of resources according to at least one set of radio bearer parameters describing individual radio bearer configurations of a set of radio bearer configurations. Each radio bearer configuration may be associated to a configuration identifier. The radio access network may further signal on the set of radio bearer configurations and the configuration identifiers associated to the individual radio bearers of said set to at least the mobile terminal information. Further, it may receive a connection setup request message from a mobile terminal at the network element terminating the radio resource control protocol in the radio access network, wherein the connection setup request message comprises a configuration identifier of a radio bearer configuration selected by the mobile terminal and to be utilized for communication on the radio bearer to be established.

In response to the connection setup request message a radio bearer between the requesting mobile terminal and the network element terminating radio resource control protocol may be established using the radio bearer configuration associated to the configuration identifier in the connection setup request message.

In a variation of this embodiment the radio access network may signal information on a set of identifiers comprising at least one available radio network temporary identifier for identification of a mobile terminal. The connection setup request message from a mobile terminal may further comprise a radio network temporary identifier selected by the mobile terminal from the set of identifiers and the selected radio network temporary identifier is utilized for identifying the mobile terminal in a communication on the established radio bearer.

The information on the set of radio bearer configurations may comprises the sets of radio bearer parameters of the configured radio bearers. The set of identifiers or the at least one set of radio bearer parameters describing individual radio bearer configurations and the configuration identifiers may be broadcast to mobile terminals by radio access network.

The radio bearer to be established in the embodiments above may be a signaling radio bearer for transmitting control plane information or wherein the radio bearer is a traffic radio bearer used for transmitting user plane data. The control plane information may be radio resource control protocol information or non-access stratum data encapsulated in radio resource control protocol messages.

The selected radio network temporary identifier may be utilized to uniquely identify the mobile terminal on a transport channel in an exchange of data between the mobile terminal and the network element terminating radio resource control protocol in a radio access network utilizing the established radio bearer.

In a further embodiment, the radio access network may further determine whether the selected radio network temporary identifier comprised in the connection setup request message from a mobile terminal has not been already selected by another mobile terminal. If so, it may select a new radio network temporary identifier not utilized by another mobile terminal and providing the new radio network temporary identifier to the mobile terminal, which will use the new radio network temporary identifier for identifying the requesting mobile terminal in a communication on the established radio bearer.

In a variation of this embodiment, the radio access network may further notify the mobile terminal that it may not use the selected radio network temporary identifier for identification, if it has been determined that the radio network temporary identifier comprised in the connection setup request message has been already selected for identifying another mobile terminal.

In a further variation of this embodiment, the mobile terminal is notified that it may not use the selected radio network temporary identifier for identification by transmitting the selected radio network temporary identifier and a collision flag being set on a downlink physical control channel associated to a shared or dedicated transport channel for which the selected radio network temporary identifier is intended to be used.

Moreover, a connection setup message comprising a new radio network temporary identifier to be used by the mobile terminal may be transmitted to the requesting mobile terminal. When sending the connection setup message, the mobile terminal may be identified as the recipient of the message by a non-access stratum temporary identifier or a permanent identifier assigned to the requesting mobile terminal.

In another embodiment of the invention, the mobile terminal may be notified that it may not use the selected radio network temporary identifier for identification of the requesting mobile terminal by transmitting a non-access stratum temporary identifier or a permanent identifier of the requesting mobile terminal on a downlink physical control channel associated to a shared transport channel for which the selected radio network temporary identifier is intended to be used.

In a variation of the embodiment, the radio access network may transmit a downlink message of a non-access stratum protocol encapsulated in a radio resource control protocol message to the mobile terminal, wherein the new radio network temporary identifier is provided within a layer 2 packets' header of said radio resource control protocol message packet encapsulating the downlink message of the non-access stratum protocol.

In a further variation, the message providing the new radio network temporary identifier to the mobile terminal further indicates the time instant (also denoted activation time) at which the requesting mobile terminal and the radio access network start using the new radio network temporary identifier.

According to a further embodiment of the invention the set of identifiers may be updated in response to reception of a connection setup request message, if the selected radio network temporary identifier comprised in the connection setup request message is not utilized by another mobile terminal. Further, the radio access network may signal the information on the updated set of identifiers and an indication that the set of identifiers has been updated.

In another embodiment of the invention the set of radio bearer configurations may be updated in response to the establishment of the radio bearer, and information on the updated set of radio bearer configurations and an indication that the set of radio bearer configurations has been updated may be signaled to the mobile terminals.

In the different embodiments of the invention as well as in their variations, the radio access network may be an UMTS radio access network and the radio network temporary identifier may be one of a H-RNTI associated to a high speed shared downlink, a Primary or Secondary E-RNTI associated to an enhanced uplink dedicated transport channel and a LTE-RNTI associated to a shared uplink and downlink transport channel.

A further embodiment of the invention relates to the mobile terminal behavior. The embodiment provides a method for establishing a radio bearer between a network element in a radio access network terminating radio resource control protocol and a mobile terminal. The mobile terminal may receive a set of identifiers comprising at least one radio network temporary identifier available for identification of mobile terminals from the radio access network It may select a radio network temporary identifier from the set of identifiers and transmit a connection setup request message to the network element terminating the radio resource control protocol in the radio access network, wherein the connection setup message comprises the selected radio network temporary identifier. The mobile terminal may further establish a radio bearer between the requesting mobile terminal and the network element terminating radio resource control protocol in a radio access network, wherein the selected radio network temporary identifier is utilized for identifying the mobile terminal on the established radio bearer.

For example, the selected radio network temporary identifier may be utilized for identifying the mobile terminal on a shared transport channel to which the established radio bearer is mapped.

Tin a variation of this embodiment, the connection setup request message may further comprise a configuration identifier that is identifying a configured radio bearer from a set of radio bearer configurations to be utilized for communication on the radio bearer between the mobile terminal and the network element terminating radio resource control protocol in a radio access network.

Moreover, the mobile terminal may receive information on the set of radio bearer configurations and the configuration identifiers associated to the individual radio bearers of said set in at least the mobile terminal and may select a radio bearer configuration identified by a configuration identifier from the set of radio bearer configurations. The configuration identifier in the connection setup request message indicates the selected radio bearer configuration to the network element terminating the radio resource control protocol.

Another embodiment of the invention relates to an alternative method for establishing a radio bearer between a network element in a radio access network terminating radio resource control protocol and a mobile terminal. According to this method, the mobile terminal receives information on the set of radio bearer configurations and the configuration identifiers associated to the individual radio bearers of said set from the radio access network. Further, the terminal selects a radio bearer configuration associated to a configuration identifier from the set of radio bearer configurations and transmits a connection setup request message to the network element terminating the radio resource control protocol in the radio access network, wherein the connection setup message a configuration identifier that is associated the selected configured radio bearer.

Further, the mobile terminal may establish a radio bearer between the requesting mobile terminal and the network element terminating radio resource control protocol in a radio access network using the selected radio bearer configuration.

In a variation of this embodiment, the terminal may further receive a set of identifiers comprising at least one radio network temporary identifier available for identification of mobile terminals from the radio access network, and may select a radio network temporary identifier from the set of identifiers. The connection setup request message may further comprise the selected radio network temporary identifier which is utilized for identifying the mobile terminal on the established radio bearer

According to another embodiment of the invention the mobile terminal further receives a new radio network temporary identifier not assigned to another mobile terminal from the radio access network, in case the selected radio network temporary identifier comprised in the connection setup request has already been assigned to another mobile terminal. This new radio network temporary identifier is used for identifying the mobile terminal on a shared transport channel used in a communication on the established radio bearer.

In a variation, the mobile terminal may receive a notification that the selected radio network temporary identifier may not be used for identification, if the radio network temporary identifier comprised in the connection setup request has been already assigned to another mobile terminal.

The mobile terminal may be notified that it may not use the selected radio network temporary identifier for identification by receiving the selected radio network temporary identifier and a collision flag being set on a downlink physical control channel associated to shared transport channel for which the selected radio network temporary identifier is intended to be used. The mobile terminal may further receive a message comprising the new radio network temporary identifier to be used by the mobile terminal. When receiving the message, the mobile terminal may identified as the recipient of the message by a non-access stratum temporary identifier or a permanent identifier assigned to the requesting mobile terminal.

In another embodiment of the invention, the mobile terminal is notified that it may not use the selected radio network temporary identifier for identification by receiving a non-access stratum temporary identifier or a permanent identifier of the mobile terminal on a downlink physical control channel.

In a variant of this embodiment, the mobile terminal may receive a downlink message of a non-access stratum protocol, wherein the new radio network temporary identifier is received with a layer 2 packets' header of a radio resource control protocol message encapsulating the downlink message of the non-access stratum protocol.

Another embodiment of the invention suggests that the mobile terminal may receive (e.g. via broadcast) an updated set of identifiers and an indication that the set of identifiers has been updated.

The mobile terminal may also receive information on an updated set of radio bearer configurations and an indication that the set of radio bearer configurations has been updated (e.g. via broadcast).

In another embodiment, the mobile terminal may estimate the resources available on the air interface to the radio access network based on information on at least one set of radio link parameters received from the radio network during cell selection or reselection procedure.

A further embodiment of the invention provides a network element in a radio access network terminating radio resource control protocol establishing a radio bearer between the network element terminating radio resource control protocol and a mobile terminal, The network element comprises a transmitter for signaling to at least one mobile terminal set of identifiers comprising at least one available radio network temporary identifier for identification of a mobile terminal, a reception unit for receiving a connection setup request message from a mobile terminal at the network element terminating the radio resource control protocol in the radio access network, wherein the connection setup request message comprises a radio network temporary identifier selected by the mobile terminal from the set of identifiers and a processing unit for establishing in response to the connection setup request message a radio bearer between the requesting mobile terminal and the network element terminating radio resource control protocol in a radio access network, wherein the selected radio network temporary identifier is utilized for identifying the mobile terminal in a communication on the established radio bearer.

Another embodiment of the invention provides an alternative network element in a radio access network terminating radio resource control protocol establishing a radio bearer between the network element terminating radio resource control protocol and a mobile terminal. This network element may comprise a configuration unit for preconfiguring a pool of resources according to at least one set of radio bearer parameters describing individual radio bearers of a set of radio bearer configurations, wherein an individual radio bearer configuration is associated to a configuration identifier, a transmitter for signaling to at least the mobile terminal information on the set of radio bearer configurations and the configuration identifiers associated to the individual radio bearers of said set, a receiver for receiving a connection setup request message from a mobile terminal at the network element terminating the radio resource control protocol in the radio access network, wherein the connection setup request message comprises a configuration identifier of a radio bearer configuration selected by the mobile terminal and to be utilized for communication on the radio bearer to be established, and a processing unit for establishing in response to the connection setup request message a radio bearer between the requesting mobile terminal and the network element terminating radio resource control protocol using the configured radio bearer associated to the configuration identifier in the connection setup request message.

Both network elements above may comprise further means adapted to perform the method for establishing a radio bearer between a network element in a radio access network terminating radio resource control protocol and a mobile terminal according to one of the various embodiments of the invention and variations described above.

A further embodiment of the invention relates of a mobile terminal establishing a radio bearer between a network element in a radio access network terminating radio resource control protocol and the mobile terminal. The mobile terminal may comprise a receiver for receiving from the radio access network a set of identifiers comprising at least one radio network temporary identifier available for identification of mobile terminals, a processing unit for selecting a radio network temporary identifier from the set of identifiers, and a transmitter transmitting a connection setup request message to the network element terminating the radio resource control protocol in the radio access network, wherein the connection setup message comprises the selected radio network temporary identifier. The processing unit of the mobile terminal may be adapted to establish a radio bearer between the requesting mobile terminal and the network element terminating radio resource control protocol in a radio access network, and selected radio network temporary identifier is utilized for identifying the requesting mobile terminal on the shared transport channel used in a communication on the established radio bearer.

An alternative mobile terminal establishing a radio bearer between a network element in a radio access network terminating radio resource control protocol and the mobile terminal is provided in a further embodiment of the invention. This mobile terminal may comprise a receiver for receiving information on the set of radio bearer configurations and the configuration identifiers associated to the individual radio bearers of said set from the radio access network, a processing unit for selecting a radio bearer configuration associated to a configuration identifier from the set of radio bearer configurations, and a transmitter for transmitting a connection setup request message to the network element terminating the radio resource control protocol in the radio access network, wherein the connection setup message a configuration identifier that is associated the selected configured radio bearer. The processing unit is adapted to establish a radio bearer between the requesting mobile terminal and the network element terminating radio resource control protocol in a radio access network using the selected radio bearer configuration.

The mobile terminals above may comprise further means adapted to perform the method for establishing a radio bearer between a network element in a radio access network terminating radio resource control protocol and a mobile terminal according to one of the various embodiments of the invention and variations described above.

Another embodiment relates to a mobile communication system comprising a network element and one or more mobile terminals.

Further, another embodiment of the invention provides a computer readable medium storing instructions that, when executed by a processing unit cause the execution of the steps of the method for establishing a radio bearer between a network element in a radio access network terminating radio resource control protocol and a mobile terminal according to one of the various embodiments of the invention and variations described above in the network element. Accordingly, another embodiment of the invention provides a computer readable medium storing instructions that, when executed by a processing unit cause the execution of the steps of the method for establishing a radio bearer between a network element in a radio access network terminating radio resource control protocol and a mobile terminal according to one of the various embodiments of the invention and variations described above

### BRIEF DESCRIPTION OF THE FIGURES

In the following the invention is described in more detail in reference to the attached figures and drawings. Similar or corresponding details in the figures are marked with the same reference numerals.
- **Fig. 1**: shows the high-level architecture of UMTS,
- **Fig. 2**: shows the architecture of the UTRAN according to UMTS R99/4/5,
- **Fig. 3**: shows a Drift and a Serving Radio Subsystem in a UMTS network,
- **Fig. 4**: shows an overview of the protocol model of the UTRAN in an UMTS network,
- **Fig. 5**: shows an overview of the radio interface protocol architecture of the UTRAN,
- **Fig. 6**: shows a standard UMTS RRC connection setup procedure,
- **Fig. 7**: shows a radio bearer establishment procedures according to an embodiment of the invention,
- **Fig. 8 and 9**: show two alternative collision avoidance mechanisms in a radio bearer establishment procedures according to different embodiments of the invention,
- **Fig. 10**: shows an exemplary format of additional layer 2 PDU header information according to an embodiment of the invention, and
- **Fig. 11 to 13**: show different formats for providing sets of radio bearer parameters of a set of radio bearer configurations according to different embodiments of the invention.

### DETAILED DESCRIPTION OF THE INVENTION

The following paragraphs will describe various embodiments of the invention. For exemplary purposes only, most of the embodiments are outlined in relation to a UMTS communication system and the terminology used in the subsequent sections mainly relates to the UMTS terminology, as the invention may be advantageously used in this type of communication network. However, the terminology used and the description of the embodiments with respect to a UMTS architecture is not intended to limit the principles and ideas of the inventions to such systems.

Also the detailed explanations given in the Technical Background section above are intended to better understand the mostly UMTS specific exemplary embodiments described in the following and should not be understood as limiting general ideas underlying the invention to the described specific implementations of processes and functions in the mobile communication network.

Before discussing the different exemplary embodiments of the invention, some definitions of terms are provided in the following.

*A preconfiguration* may be defined as a procedure aimed at informing one or more target objects of a configuration related to an operational context to be created later by means of an establishment procedure. Exceptionally, an operational context may be created in one or more target objects by means of preconfiguration. The target object may store configuration that will be used later in establishment of a related logical entity. Further, it is important to notice that a preconfiguration in the context of this document includes a reservation of resources (or establishment of a pool of resources) that are to be utilized for the related logical entity.

With respect to a standard UMTS system, it should be noted that the UMTS radio access network may "preconfigure" RB in the UE by signaling respective configuration. The use of "preconfigurations" in the standard system is aimed to reduce the size of signaling messages to be used in the RB establishment procedure as only a simple pointer to the configuration already stored in target objects can be used in the messages instead of signaling complete configuration. However, in contrast to the document's definition of preconfiguration, no resources in the network are reserved when using a "preconfiguration". The reservation of resources is a separate procedure to be performed when the resources to be reserved are actually needed to serve a UE.

A *configuration* of a certain logical entity may be defined as a set of attributes describing the entity. A configuration may comprise operational settings and identification means related to the entity: For example, in a UMTS system, a service provided by UTRAN (UMTS Terrestrial Radio Access Network) for transmission of information between CN (Core Network) and UE (User Equipment) is denoted as RAB (Radio Access Bearer). This RAB as a logical entity is completely described in terms of RB (Radio Bearer) attributes, TrCH (Transport Channel) attributes and PhyCH (Physical Channel) attributes. In the following we will refer to a set comprising RB attributes, TrCH attributes and optionally PhyCH attributes as a set of radio bearer parameters.

Obviously, a hierarchical relation exists between numbered logical entities in that PhyCH may be defined as a means for transmission of coded bits by physical layer. A TrCH may be defined as a service offered by physical layer to Layer 2, and, finally, Traffic Radio Bearer (TRB) / Signaling Radio Bearer (SRB) may be defined as a service offered to higher layer in User Plane and Control Plane respectively. For exemplary purposes, it is assumed that a signaling or traffic radio bearer is provided between a network element in the radio access network responsible for radio network-related control signaling (in contrast to transport-network related control signaling) and a mobile terminal. Another usage of the term network element in the radio access network refers to a network element controlling radio resource management in the radio access network and therefore typically terminating the radio resource control protocol.

Concerning the different types of parameters that may be included in the set of radio bearer parameters, some examples are provided below. Typical PhyCH attributes may for example relate to modulation format, coding scheme and orthogonalization means for given radio access method. The latter for WCDMA (Wideband Code Division Multiple Access) may comprise identification of orthogonal and scrambling codes in the downlink and identification of scrambling codes in the uplink. Alternatively, the latter for OFDMA (Orthogonal Frequency Division Multiple Access) may comprise identification of chunks (resource allocation units in time-frequency plane). A very detailed example of parameters for new OFDMA based radio access may be found in Tdoc R1-050707 3GPP TSG RAN WG1#42 on LTE "Physical Channels and Multiplexing in Evolved UTRA Downlink", by NTT DoCoMo, NEC, Sharp.

Radio Bearer attributes may for example comprise identification of Layer 2 RLC protocol settings etc. Finally, the attribute a configuration of each logical entity may comprise is an identifier to be assigned to the logical entity. A very detailed example of a RAB configuration and its parameters may be found in the section 10.3.4.8 of 3GPP TS 25.331.

As can be seen from the above definitions each configuration may comprise operational settings and identification means related to the entity being configured.

A set of radio bearer configurations refers to a set of at least one radio bearer for which a preconfiguration is performed. The radio bearers are each described by a set of radio bearer parameters (as defined above). Obviously, more than one radio bearer may have the same sat of radio bearer parameters

*Establishment* of a certain logical entity may be defined as a *procedure* aimed at creating operational context in two or more objects representing logical termination points of the entity being established. These objects will be referred to as target objects. An operational context may be directly related to a configuration in that it may comprise operational settings and identifications means. In the following, identification means may be often referred to as identifier.

A *temporary UE identifier* or *temporary identifier* may be defined as a unique integer number assigned to a terminal by the communication system or as a unique integer number chosen by terminal and confirmed by the communication system.

A *radio network temporary UE identifier* or *radio network temporary identifier* is used for identification of a mobile terminal on transport channels. The identification may be of Layer 1 outband or of Layer 2 inband type. This type of identifier is for example typically assigned during RRC Connection Establishment procedure by network element in a radio access network terminating radio resource control protocol, as has been described above. Examples of this identifier in a UMTS legacy system are Primary and Secondary E-RNTI, H-RNTI, U-RNTI, etc.

A *non-access stratum temporary UE identifier* or *non-access stratum temporary identifier* is used for identification of a mobile terminal during Core Network procedures. Considering a UMTS system for exemplary purposed, this type of identifier is typically assigned during GPRS Attach / Registration procedure by network element in a core network terminating GPRS mobility management protocol. An example of this identifier in legacy system is P-TMSI (Packet Temporary Mobile Subscriber Identity).

Finally, the difference between permanent identifiers and temporary identifiers should be noted. A *permanent (UE) identifier* may be defined as a unique integer number assigned to the SIM card of a terminal. An example of this identifier in the UMTS legacy system is IMSI (International Mobile Subscriber Identity).

In the following, an example of establishment procedure is given. For example, in a UMTS system, RRC (Radio Resource Control) context is created when establishing connection (signaling connection or Signaling RB) in RNC (Radio Network Controller) and UE. When establishing RB for multicast service, operational context may be created in RNC and in a multiplicity of UEs.

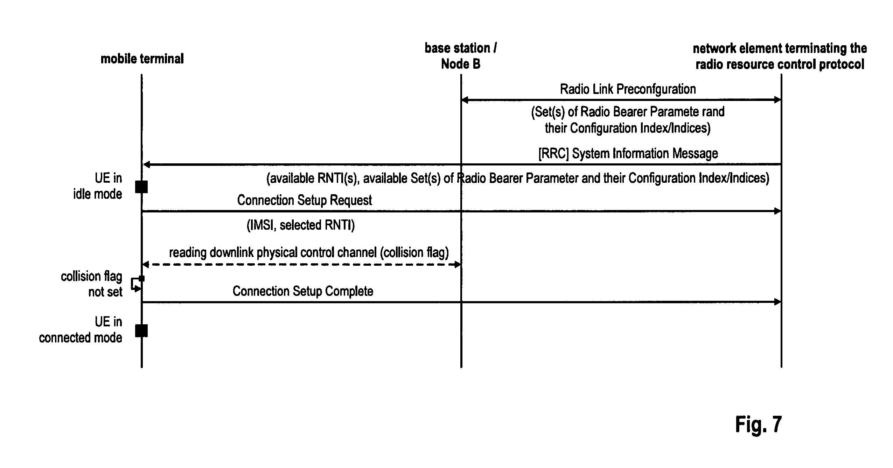

Fig. 7 shows an exemplary signaling procedure according to an embodiment of the invention for establishing a radio bearer (signaling radio bearer or traffic radio bearer) between a mobile terminal and a network element in the radio access network that is terminating the radio resource control protocol.

In a first step, a radio link preconfiguration is performed in the access network in order to preconfigure a set of radio bearer configurations. The network element in the radio access network that is terminating the radio resource control protocol provides set(s) of radio bearer parameters describing different settings for the radio bearer in the set of radio bearer configurations to the base station(s). A base station will reserve resources on the air interface and on the wired interface to the network element in the radio access network that is terminating the radio resource control protocol depending on the parameters in the set(s). Moreover, the operational context for setting up the different radio bearers of the radio bearer configurations is established in the network element terminating the radio resource control protocol and the base stations. Further, the different set(s) of radio bearer parameters may be each assigned a configuration identifier (or index), which can be used to identify a respective set of radio bearer parameters, i.e. a respective preconfigured radio bearer. By means of this configuration of a set of radio bearer configurations, the latency in establishing a radio link upon receiving a connection setup from a mobile terminal may be significantly reduced.

Further, the mobile terminals in a cell controlled by the base stations are informed on the available settings for the radio bearers, i.e. the available sets of radio bearer configurations according to which the radio bearers are already configured according to the set of radio bearer parameters at the base stations. For this purpose, a System Information Message is provided from the radio access network to the mobile terminals, e.g. by means of broadcast (or unicast, which is however less efficient). Considering an exemplary UMTS system, the System Information message may for example be broadcast on BCCH logical channel. BCCH logical channel may be further mapped upon Evolved-BCH transport channel.

The System Information Message comprises an indication of the radio bearer configurations, i.e. their configured sets of radio bearer parameters, as well as the configuration identifier (or index) of each of the configured radio bearers for allowing the mobile terminal to select a configuration.

Considering again for exemplary purposes a UMTS system, by means of providing the information on the available radio bearer configurations to the mobile terminal the UE may create the operational context (e.g. comprising Signaling Radio Bearer settings /RRC connection settings and UE identification means) autonomously during RRC connection establishment procedure without signaling the requirement to signal the content of this context from the network. A Node B is preconfigured by RNC so that pool of resources is established and the operational context (e.g. RRC connection settings and identification means) are stored.

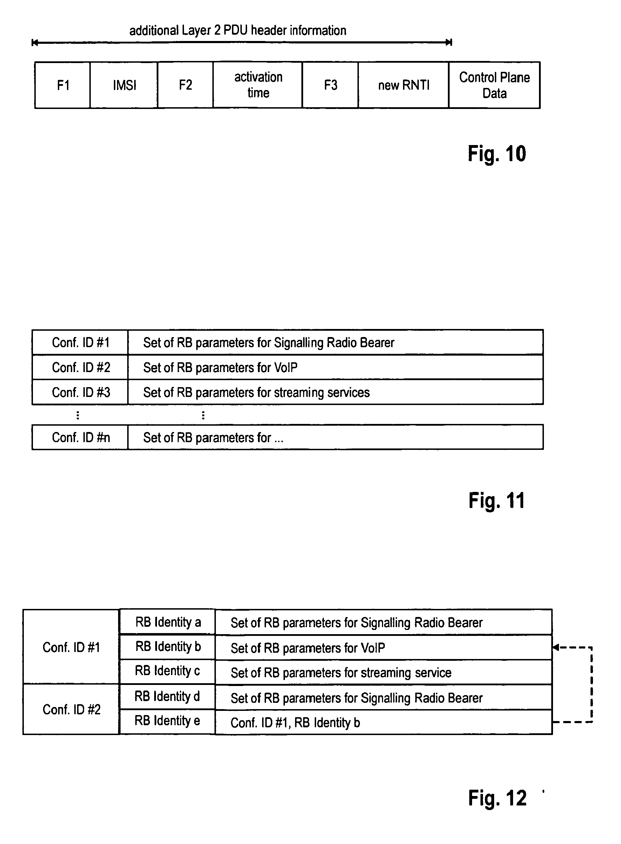

Exemplary formats for communicating the radio bearer configurations, i.e. their set(s) of radio bearer parameters describing the radio bearers, to the mobile terminals are shown in Fig. 11 to 13. In Fig. 11, each row comprises a configuration identifier (or index) and a set of radio bearer parameters. It should be noted that each configured radio bearer is assigned a radio bearer identity which allows a respective one of the mobile terminals to use and distinguish different radio bearers. This radio bearer identity may be typically included in the set of radio bearer parameters describing the respective radio bearer. In the example shown in Fig. 11, all radio bearer configurations for which resources are reserved are indicated to the mobile terminals.

To reduce the size of configuration data included in the System Information Message, the notation as used in Fig. 12 may be used to indicate the available configured radio bearers (and their settings) to the mobile terminals. In the example of Fig. 12, multiple radio bearers are grouped. The radio bearers in each group are associated with a single configuration identifier (or index) and are distinguished by the different radio bearer identities. Each pair of the configuration identifier (or index) and the radio bearer identity is associated to a configured set of radio bearer parameters (e.g. for a signaling radio bearer or a traffic radio bearer). In case a radio bearer is configured with the same set of parameters as a previously defined parameter, the set of parameters may be defined by referencing the previously defined set of parameters. This may for example be implemented by including the pair of the configuration identifier (or index) and the radio bearer identity in the description of the parameters to reference the previously defined parameter set, as indicated in Fig. 12 by the dotted arrow.

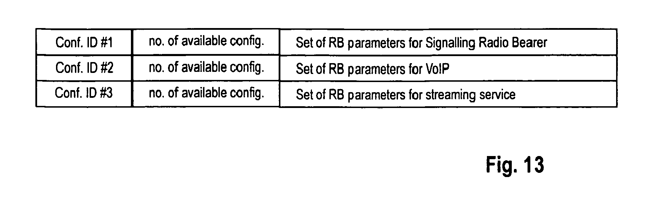

A further alternative for communication the available configured radio bearers to the mobile terminals is shown in Fig. 13. In this example, each row comprises a configuration identifier (or index) for indexing the respective radio bearer configuration and the number of configurations available. I.e. this format allows indicating the presence of several radio bearers in the resource pool with the same configuration (i.e. with the same set of radio bearer parameters). In case the access network distinguishes connections of a single mobile terminal on the "radio-bearer level" by the radio bearer identifier and an identifier assigned to the respective mobile terminal, the solution of Fig. 13 for communicating the available radio bearers in resource pool may be problematic: the mobile terminal may only select a single bearer of each configuration, as the set of parameters for each configuration typically only comprises a single radio bearer identifier for identifying the bearer.

In case the available reserved resources change in the network, e.g. due to mobile terminals establishing or tearing down radio bearers, the information in the System Information message are updated accordingly.

With respect to the update of changing preconfigured resources in the access network, it may be important for the mobile terminal to know the time instant at which the change occurs exactly. In these cases, the radio access network may inform the terminal by paging or broadcast message (for example a [RRC] SYSTEM INFORMATION CHANGE INDICATION) that a change in the set of radio bearer configurations has occurred.

As indicated above, the preconfiguration of radio bearers and the communication of the available configurations to the mobile terminals may reduce or eliminate the latency for setting up a radio link upon receiving a connection request for a radio bearer from a mobile terminal.

Another solution for reducing the latency in a radio bearer setup procedure is to eliminate the explicit assignment of a temporary identifier to the mobile terminals upon connection setup, as shown in Fig. 6 ([RRC] Connection Setup message). For this purpose, another embodiment of the invention suggests to indicate a set of identifiers comprising the available radio network temporary identifiers that can be selected for communication on a radio bearer, to the mobile terminals. The mobile terminals may select a radio network temporary identifier for identification of the respective mobile terminal when setting up the radio bearer.

The information on the available radio network temporary identifier(s) may be communicated to the mobile terminals using the above mentioned System Information message. This message may also include information on the available configured radio bearers, as outlined above. The available radio network temporary identifier may for example be included by specifying ranges of radio network temporary identifiers, providing a list of radio network temporary identifiers, etc.

Taking UMTS as an example, the Primary and Secondary E-RNTI (set by Node B in the legacy system) may be obtained by the network element terminating the radio resource control protocol (in this example RNC) from Node B and may be broadcast by the network element terminating the radio resource control protocol afterwards. The mobile terminal will store the set of identifiers locally to select one of the identifiers upon connection setup.

Prior to sending a Connection Setup Request message, the mobile terminal may select one of the radio link temporary identifiers included in the set of identifiers received from the radio access network. Further, the mobile terminal may select a radio bearer configuration and may initiate the operational context for the radio bearer, the transport channel and optionally for the physical channel configuration in accordance with the radio bearer parameters of the selected radio bearer configuration.

To initiate setup of a radio bearer, a mobile terminal in idle mode transmits a Connection Setup Message to the network element terminating the radio resource control protocol. Considering an exemplary UMTS system, the Connection Setup Message may for example be transmitted via a CCCH logical channel that is further mapped on a CACH transport channel.

The Connection Setup Message includes the radio network temporary identifiers selected by the mobile terminal. Further, the Connection Setup Message may also comprise a configuration identifier (or index) of the selected radio bearer configuration. By the inclusion of the selected radio network temporary identifier to the Connection Setup message the mobile terminal indicates that it intends to use this identifier as an identifier of the terminal for communication on the radio bearer. According to one embodiment of the invention, the selected radio network temporary identifier is utilized for identifying the mobile terminal on a shared or dedicated transport channel onto which the radio bearer to be established is mapped. The configuration identifier (or index) specifies the set of radio bearer parameters describing the radio bearer to be set up.

Upon reception of the setup message at the network element terminating the radio resource control protocol receives, the network element determines, whether the radio network temporary identifier selected by the mobile terminal is already used or is simultaneously chosen by another mobile terminal. Assuming that the mobile terminal is the only terminal that has selected the radio network temporary identifier, no collision in the radio network temporary identifier is detected.

In case a collision is detected, according to a further embodiment of the invention, the network element will indicate the collision to the mobile terminal(s), as will described below. According to this exemplary embodiment, the radio access network may indicate the presence of a collision by means of setting a collision flag on a downlink physical control channel being associated to the transport channel on which established radio bearer is mapped.

The mobile terminal reads a downlink physical control channel to detect, whether the collision flag is set or not. If no collision flag is set on the downlink physical control channel, the mobile terminal may send a connection Setup Complete message to the network element terminating the radio resource control protocol to finish the setup of the radio bearer and switches to connected mode. Considering an exemplary UMTS system, the Connection Setup Complete message may for example be transmitted via a DCCH logical channel that is further mapped on a SUCH transport channel.

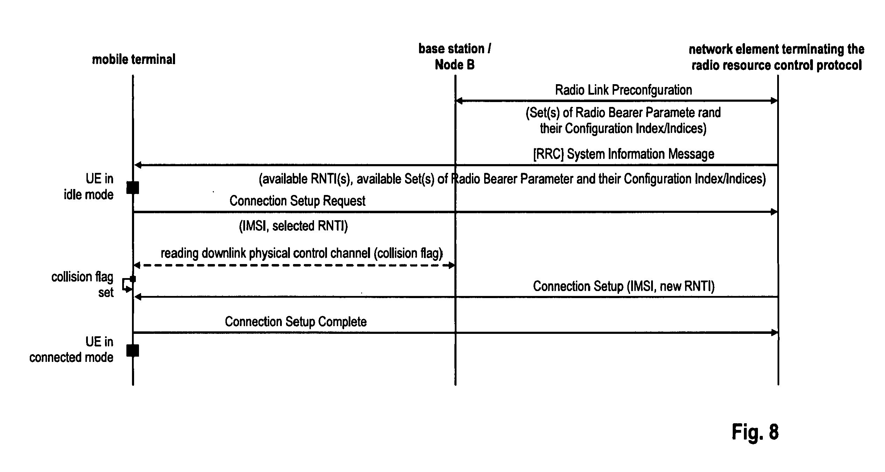

Otherwise, collision recovery may be performed, as will be outlined below with reference to Fig. 8.

Comparing this radio bearer setup procedure according to an embodiment of the invention to the standard radio bearer setup procedure in Fig. 6 it is noted that the latency L2 for establishing the radio link as well as the latency L3 for assigning the radio network temporary identifier to the mobile terminal may be avoided by preconfiguration of radio bearers including a reservation of resources and allowing the mobile terminals to select a radio network temporary identifier from a set of available radio network temporary identifier.

Due to the establishment and tear-down of radio bearers, the available radio network temporary identifiers as well as the available preconfigure radio bearers in the radio access network may change constantly. According to another embodiment of the invention, the set of identifiers may be updated accordingly and the updated set of identifiers may be signaled to the mobile terminals. Since a change in the set of identifiers also implies that the pool of resources preconfigured in the network is changing, an update of the radio bearer configurations may also be performed and the updated radio bearer configurations may be provided to the mobile terminals as described above. In this context, it may be also beneficial to synchronize the signaling of an updated set of identifiers and an updated set of radio bearer configurations. This may for example be achieved by including an activation time, i.e. a time instant at which the update is to be applied, to the signaling message providing the updated set of identifiers and an updated set of radio bearer configurations to the terminals.

Further embodiments of the invention relate to resolving a situation, in which more than one mobile terminal select the same radio network temporary identifier or in which a mobile terminal selects a radio network temporary identifier already used by another terminal, e.g. due to an update of the set of identifiers has not been performed yet or in time. Generally, it should be noted that the occurrence of these situations should be very rare (0.01 % and less in typical scenarios), nevertheless a mechanism to overcome this collision of the radio network temporary identifiers may be defined.

A first embodiment of the invention allowing to resolve the collision problem outlined above will be described with reference to Fig. 8. The figure shows the exemplary signaling in a radio bearer setup procedure. The procedure is similar to the one illustrated in Fig. 7 described above, so that only the differences between the two figures are discussed in the following. In contrast to the signaling procedure in Fig. 7, it is assumed in Fig. 8 that the mobile terminal has selected a radio network temporary identifier already used by another mobile terminal. The network element terminating the radio resource control protocol has detected the collision and has set the collision flag on the downlink shared physical control channel to which the radio bearer to be established is mapped according to the radio bearer parameters describing the radio bearer.

Upon having sent the Connection Setup Request message, the mobile terminal will monitor the downlink shared physical control channel, for example for a given time span. As the physical control channel is a shared channel shared by the mobile terminals in the cell, the mobile terminal may be notified by "writing" the selected radio network temporary identifier on the downlink shared physical control channel and setting the collision flag. When monitoring the downlink shared physical control channel, the mobile terminal will detect its selected radio network temporary identifier and will thus know that the information following the radio network temporary identifier on the physical channel are destined to it. The information following the radio network temporary identifier on the physical channel includes the collision flag that has been set to indicate the collision.

In an exemplary UMTS scenario, the newly established radio bearer is mapped to a SUCH transport channel in the uplink. In this example, the downlink shared physical control channel is the physical control channel for the SUCH transport channel in the uplink used for communicating control information to the mobile terminal.

If the selected radio network temporary identifier and the set collision flag have been detected downlink shared physical control channel, the mobile terminal will await a Connection Setup Message from the network element terminating the radio resource control protocol (for example a RRC Connection Setup message), which is addressed to the mobile terminal by means of a permanent identifier of the mobile terminal (for example the IMSI or P-IMSI of the UE) and includes a new radio network temporary identifier (for example new RNTI) that is to be used by the mobile terminal.

After having received the Connection Setup Message from the network element terminating the radio resource control protocol, the mobile terminal may respond by a Connection Setup Complete message to finish the radio bearer establishment procedure and switches to connected mode.

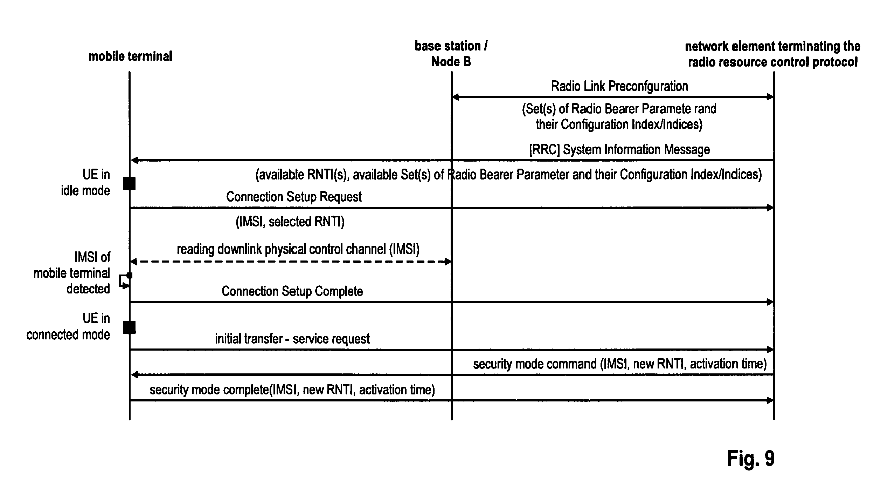

In the embodiment of the invention described with respect to Fig. 8, Layer 1 outband signaling has been used to recover the collision in the radio network temporary identifier. Fig. 9 illustrates the exemplary signaling in a radio bearer setup procedure according to another embodiment of the invention, where the collision is resolved by means of Layer 2 inband signaling.

The first steps of performing the radio link preconfiguration, the transmission and handling of the information in the System Information Message as well as the transmission the Connection Setup Request message and related procedures are similar to those described with respect to Fig. 7 and 8.

Also in the example shown in Fig. 9 the collision situation is indicated to the mobile terminal by means of a downlink shared physical control channel. In contrast to the solution proposed in Fig. 8, a permanent identifier is written to the physical control channel to indicate to the mobile terminal that the information following the permanent identifier is destined to the mobile terminal. The collision flag is comprised in this information. In the exemplary scenario assumed in Fig. 9, the mobile terminal may not use its selected radio network temporary identifier, so that the collision flag has been set by the network element terminating the radio resource control protocol.

Upon detecting the collision flag on the downlink shared physical control channel, the mobile terminal proceeds with finishing the radio bearer setup procedure and switches to connected mode. To establish the service via the established radio bearer, the mobile terminal next transmits an uplink message of a non-access stratum protocol (for example an Initial Transfer - Service Request message) to the radio network via the radio bearer.

The network element terminating the radio resource control protocol detects that an uplink message of a non-access stratum protocol is relayed through the new established radio access bearer assigned to the terminal that has selected the radio network temporary identifier already in use. Upon relaying the first downlink message of the non-access stratum protocol (for example a Security Mode Command), the network element includes additional header information to the Layer 2 PDU header(s) of the Layer 2 PDU(s) that encapsulate(s) the downlink message of the non-access stratum protocol. This additional header information includes a new radio network temporary identifier to the mobile terminal that has previously selected a radio network temporary identifier already in use by another mobile terminal.

An exemplary format of the additional header information included in the Layer 2 PDU(s) is illustrated in Fig. 10. The header information according to this example has three fields: a first field ("IMSI") that comprises a permanent identifier or a non-access stratum identifier of the mobile terminal to which the new radio network temporary identifier is to be assigned, a second field ("activation time") for indicating at which time instant the new radio network temporary identifier is to be used by the mobile terminal and a third field ("new RNTI") comprising the new radio network temporary identifier. Each of the three fields is preceded by a flag (F1, F2 and F3 respectively) that indicates whether a respective one of the fields is set, i.e. contains data, within the header information.

The first field comprising the permanent identifier (e.g. IMSI) or a non-access stratum identifier (e.g. P-IMSI) is used to uniquely identify the mobile terminal to which the new radio network temporary identifier is to be assigned. Since the Layer 2 PDU(s) encapsulating the non-access stratum protocol message (referred to as "Control Plane Data" in Fig. 10) may be transmitted on the downlink via a shared physical control channel all mobile terminals will read the data on the physical channel providing the Layer 2 PDU(s). To destine the data to the correct mobile terminal, the first field comprising the permanent identifier or a non-access stratum identifier is used. I.e. the destination of the downlink physical layer data is determined in Layer 2 in this exemplary embodiment.

To confirm the assignment of the new radio network temporary identifier, the mobile terminal responds with reflecting the permanent identifier/non-access stratum identifier and the new radio network temporary identifier (optionally also the activation time) in the header information in Layer 2 PDU(s) encapsulating the next uplink message of the non-access stratum protocol (for example Security Mode Complete message).

In an exemplary implementation of the collision avoidance mechanism described with respect to Fig. 9 above in a UMTS system, the non-access stratum protocol messages in the uplink may be provided via a DCCH logical channel mapped to a SUCH transport channel to the radio access network. The non-access stratum protocol messages in the downlink may be provided via a DCCH logical channel mapped to a SDCH transport channel to the UEs.

The benefit of the collision avoidance mechanism of Fig. 9 is that the mobile terminal may continue call setup while negotiating new radio network temporary identifier with the network. A disadvantage relative to the mechanism illustrated in Fig. 8 is that the Layer 1 processing chain has to be fully completed prior to being able to detect the permanent identifier/ non-access stratum identifier addressing the mobile terminal in the Layer 2 PDU(s) which may negatively influence the mobile terminal's power consumption.

In the embodiments described above, the setup of a signaling radio bearer has been considered. It is also recognized that the procedures according to the different embodiments of the invention may also be used to establish a traffic radio bearer for the transmission of User Plane data. In the embodiments of the invention, the identification of mobile terminal is associated to the transport channel level. Given that definition of transport channels is bidirectional, there may be, in most general case, one identifier per uplink and downlink transport channel on which the corresponding radio bearer of a mobile terminal is mapped. Hence, a mobile terminal may select or may be assigned a plurality of different radio network temporary identifiers. The number of radio network temporary identifiers may for example depend on the number of transport channels and the type of the transport channel.

Depending on the transport channel on which the traffic radio bearer is mapped, the selection of a new radio network temporary identifier by the mobile terminal may be required. If the signaling radio bearer and traffic radio bearer are mapped on the same transport channel, a single radio network temporary identifier may be used and the two radio bearers may be distinguished by the radio bearer identity parameter. Accordingly, also the mechanisms for collision avoidance would not be needed when setting up the second bearer. Otherwise, when signaling radio bearer and traffic radio bearer are mapped upon separate transport channels, a new radio network temporary identifier is selected by/assigned to the mobile terminal for use in conjunction with the traffic radio bearer as described above.

Further it should be noted that in a UMTS access network architecture, a central node, the RNC, provides RRC connection establishment functionality. However, this functionality may also be implemented in another network element of the network. Further, different types of access network architectures are possible (e.g. architecture based on new location of radio functions). In the later example, RRC connection establishment functionality may reside in the Node Bs or an equivalent node while a central node may be reduced to the function of a gateway towards the Core Network. In This example, the step of preconfiguring and establishing the pool of resources in Node Bs may be superfluous..

Another embodiment relates to further considerations, when implementing the different procedures described above in a UMTS system. According to the current UMTS specification, the UE may (re)select a certain cell following the results of satisfactory assessment of quality level threshold criteria. These criteria are specified against reception quality of Common Pllot CHannel (CPICH) and Primary Common Control Physical CHannel (P-CCPCH). However, available resources in the target cell are not taken into account. In UTRA, BCH transport channel is mapped on the P-CCPCH. According to this embodiment, the UE may monitor information of preconfigured resources that is broadcast and (re)selects cell based also on resource availability. By taking this additional criterion into account, a likely UE behavior is that not the cell having best downlink signal quality may be selected but a cell having slightly worse downlink signal quality and more (preconfigured) resources available may be selected.

Another embodiment of the invention relates to the implementation of the above described various embodiments using hardware and software. It is recognized that the various embodiments of the invention above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

1. A method for establishing a radio bearer between a network element in a radio access network terminating radio resource control protocol and a mobile terminal, the method comprising the following steps performed by the radio access network:
signaling to at least one mobile terminal set of identifiers comprising at least one available radio network temporary identifier for identification of a mobile terminal,
receiving a connection setup request message from a mobile terminal at the network element terminating the radio resource control protocol in the radio access network, wherein the connection setup request message comprises a radio network temporary identifier selected by the mobile terminal from the set of identifiers and
establishing in response to the connection setup request message a radio bearer between the requesting mobile terminal and the network element terminating radio resource control protocol in a radio access network, wherein the selected radio network temporary identifier is utilized for identifying the mobile terminal in a communication on the established radio bearer.

2. The method according to claim 1, wherein the connection setup request message received from the mobile terminal further comprises a configuration identifier of a radio bearer configuration to be utilized for communication on the radio bearer to be established, wherein the radio bearer configuration is selected by the mobile terminal from a set of radio bearer configurations being each identified by a respective configuration identifier.

3. The method according to claim 2, further comprising the steps of preconfiguring a pool of resources according to at least one set of radio bearer parameters describing individual radio bearer configurations of said set of radio bearer configurations, wherein each radio bearer configuration is associated to a configuration identifier.

4. The method according to claim 3, further comprising the step of signaling information on the set of radio bearer configurations and the configuration identifiers associated to the individual radio bearers of said set to at least the mobile terminal.

5. A method for establishing a radio bearer between a network element in a radio access network terminating radio resource control protocol and a mobile terminal, the method comprising the following steps performed by the radio access network:
preconfiguring a pool of resources according to at least one set of radio bearer parameters describing individual radio bearer configurations of a set of radio bearer configurations, wherein an individual radio bearer configuration is associated to a configuration identifier,
signaling to at least the mobile terminal information on the set of radio bearer configurations and the configuration identifiers associated to the individual radio bearers of said set,
receiving a connection setup request message from a mobile terminal at the network element terminating the radio resource control protocol in the radio access network, wherein the connection setup request message comprises a configuration identifier of a radio bearer configuration selected by the mobile terminal and to be utilized for communication on the radio bearer to be established, and
establishing in response to the connection setup request message a radio bearer between the requesting mobile terminal and the network element terminating radio resource control protocol using the radio bearer configuration associated to the configuration identifier in the connection setup request message.

6. The method according to claim 5, further comprising the step of signaling a set of identifiers comprising at least one available radio network temporary identifier for identification of a mobile terminal to at least one mobile terminal,
wherein the connection setup request message from a mobile terminal further comprises a radio network temporary identifier selected by the mobile terminal from the set of identifiers, and
wherein the selected radio network temporary identifier is utilized for identifying the mobile terminal in a communication on the established radio bearer.

7. The method according to one of claims 4 to 6, wherein the information on the set of radio bearer configurations comprises the sets of radio bearer parameters of the configured radio bearers.

8. The method according to one of claims 1 to 7, wherein the set of identifiers or the at least one set of radio bearer parameters describing individual radio bearer configurations and the configuration identifiers are broadcast to mobile terminals by radio access network.

9. The method according to one of claims 1 to 8, wherein the radio bearer is a signaling radio bearer for transmitting control plane information or wherein the radio bearer is a traffic radio bearer used for transmitting user plane data.

10. The method according to claim 9, wherein the control plane information is radio resource control protocol information or non-access stratum data encapsulated in radio resource control protocol messages.

11. The method according to one of claims 1 to 10, wherein the selected radio network temporary identifier is utilized to uniquely identify the mobile terminal on a transport channel in an exchange of data between the mobile terminal and the network element terminating radio resource control protocol in a radio access network utilizing the established radio bearer.

12. The method according to one of claims 1 to 11, further comprising the steps of:
determining whether the selected radio network temporary identifier comprised in the connection setup request message from a mobile terminal has not been already selected by another mobile terminal,
if so, selecting a new radio network temporary identifier not utilized by another mobile terminal and providing the new radio network temporary identifier to the mobile terminal,
wherein the new radio network temporary identifier is used for identifying the requesting mobile terminal in a communication on the established radio bearer.

13. The method according to claim 12, further comprising the step of notifying the mobile terminal that it may not use the selected radio network temporary identifier for identification, if it has been determined that the radio network temporary identifier comprised in the connection setup request message has been already selected for identifying another mobile terminal.

14. The method according to claim 13, wherein the mobile terminal is notified that it may not use the selected radio network temporary identifier for identification by transmitting the selected radio network temporary identifier and a collision flag being set on a downlink physical control channel associated to a shared or dedicated transport channel for which the selected radio network temporary identifier is intended to be used.

15. The method according to claim 14, further comprising the step of transmitting connection setup message comprising a new radio network temporary identifier to be used by the mobile terminal to the requesting mobile terminal.

16. The method according to claim 15, wherein the mobile terminal is identified as the recipient of the message by a non-access stratum temporary identifier or a permanent identifier assigned to the requesting mobile terminal.

17. The method according to claim 13, wherein the mobile terminal is notified that it may not use the selected radio network temporary identifier for identification of the requesting mobile terminal by transmitting a non-access stratum temporary identifier or a permanent identifier of the requesting mobile terminal on a downlink physical control channel associated to a shared transport channel for which the selected radio network temporary identifier is intended to be used.

18. The method according to claim 17, further comprising the step of transmitting a downlink message of a non-access stratum protocol encapsulated in a radio resource control protocol message to the mobile terminal,
wherein the new radio network temporary identifier is provided within a layer 2 packets' header of said radio resource control protocol message packet encapsulating a downlink message of the non-access stratum protocol.

19. The method according to claim 18, wherein the message providing the new radio network temporary identifier to the mobile terminal further indicates the time instant at which the requesting mobile terminal and the radio access network start using the new radio network temporary identifier.

20. The method according to one of claims 1 to 19, further comprising the steps of:
updating the set of identifiers in response to reception of a connection setup request message, if the selected radio network temporary identifier comprised in the connection setup request message is not utilized by another mobile terminal, and
signaling the information on the updated set of identifiers and an indication that the set of identifiers has been updated.

21. The method according to one of claims 1 to 20, further comprising the steps of:
updating the set of radio bearer configurations in response to the establishment of the radio bearer, and
signaling information on the updated set of radio bearer configurations and an indication that the set of radio bearer configurations has been updated.

22. The method according to one of claims 1 to 21, wherein the radio access network is a UMTS radio access network and the radio network temporary identifier is one of an H-RNTI associated to a high speed shared downlink, a Primary or Secondary E-RNTI associated to an enhanced uplink dedicated transport channel and an LTE-RNTI associated to a shared uplink and downlink transport channel.

23. A method for establishing a radio bearer between a network element in a radio access network terminating radio resource control protocol and a mobile terminal, the method comprising the following steps performed by the mobile terminal:
receiving from the radio access network a set of identifiers comprising at least one radio network temporary identifier available for identification of mobile terminals,
selecting a radio network temporary identifier from the set of identifiers,
transmitting a connection setup request message to the network element terminating the radio resource control protocol in the radio access network, wherein the connection setup request message comprises the selected radio network temporary identifier and
establishing a radio bearer between the requesting mobile terminal and the network element terminating radio resource control protocol in a radio access network, wherein the selected radio network temporary identifier is utilized for identifying the mobile terminal on the established radio bearer.

24. The method according to claim 23, wherein the selected radio network temporary identifier is utilized for identifying the mobile terminal on a shared transport channel to which the established radio bearer is mapped.

25. The method according to claim 23 or 24, wherein the connection setup request message further comprises a configuration identifier that is identifying a radio bearer configuration from a set of radio bearer configurations to be utilized for communication on the radio bearer between the mobile terminal and the network element terminating radio resource control protocol in a radio access network.

26. The method according to claim 25, further comprising the steps of receiving information on the set of radio bearer configurations and the configuration identifiers associated to the individual radio bearer configuration of said set in at least the mobile terminal and
selecting a radio bearer configuration identified by a configuration identifier from the set of radio bearer configurations,
wherein the configuration identifier in the connection setup request message indicated the selected radio bearer configuration to the network element terminating the radio resource control protocol.

27. A method for establishing a radio bearer between a network element in a radio access network terminating radio resource control protocol and a mobile terminal, the method comprising the following steps performed by the mobile terminal:
receiving information on the set of radio bearer configurations and the configuration identifiers associated to the individual radio bearers of said set from the radio access network,
selecting a radio bearer configuration associated to a configuration identifier from the set of radio bearer configurations,
transmitting a connection setup request message to the network element terminating the radio resource control protocol in the radio access network, wherein the connection setup message comprises a configuration identifier that is associated to the configuration of selected radio bearer and
establishing a radio bearer between the requesting mobile terminal and the network element terminating radio resource control protocol in a radio access network using the selected radio bearer configuration.

28. The method according to claim 27, further comprising the steps of:
receiving from the radio access network a set of identifiers comprising at least one radio network temporary identifier available for identification of mobile terminals, and
selecting a radio network temporary identifier from the set of identifiers,
wherein the connection setup request message further comprises the selected radio network temporary identifier and
wherein the selected radio network temporary identifier is utilized for identifying the mobile terminal on the established radio bearer

29. The method according to one of claims 23 to 28, further comprising the steps of:
receiving a new radio network temporary identifier not assigned to another mobile terminal from the radio access network, in case the selected radio network temporary identifier comprised in the connection setup request has already been assigned to another mobile terminal,
wherein the new radio network temporary identifier is used for identifying the mobile terminal on a shared transport channel used in a communication on the established radio bearer.

30. The method according to claim 29, further comprising the step of receiving a notification that the selected radio network temporary identifier may not be used for identification, if the radio network temporary identifier comprised in the connection setup request message has been already assigned to another mobile terminal.

31. The method according to claim 30, wherein the mobile terminal is notified that it may not use the selected radio network temporary identifier for identification by receiving the selected radio network temporary identifier and a collision flag being set on a downlink physical control channel associated to shared transport channel for which the selected radio network temporary identifier is intended to be used.

32. The method according to claim 31, further comprising the step of receiving a message comprising the new radio network temporary identifier to be used by the mobile terminal.

33. The method according to claim 32, wherein the mobile terminal is identified as the recipient of the message by a non-access stratum temporary identifier or a permanent identifier assigned to the requesting mobile terminal.

34. The method according to claim 29, wherein the mobile terminal is notified that it may not use the selected radio network temporary identifier for identification by receiving a non-access stratum temporary identifier or a permanent identifier of the mobile terminal on a downlink physical control channel associated to shared transport channel for which the selected radio network temporary identifier is intended to be used.

35. The method according to claim 34, further comprising the step of receiving a downlink message of a non-access stratum protocol,
wherein the new radio network temporary identifier is received with a layer 2 packets' header of a radio resource control protocol message encapsulating the downlink message of the non-access stratum protocol.

36. The method according to one of claims 23 to 35, further comprising the step of receiving via broadcast an updated set of identifiers and an indication that the set of identifiers has been updated.

37. The method according to one of claims 23 to 36, further comprising the step of receiving via broadcast information on an updated set of radio bearer configurations and an indication that the set of radio bearer configurations has been updated.

38. The method according to one of claims 23 to 37, further comprising the step of estimating the resources available on the air interface to the radio access network based on information on at least one set of radio link parameters received from the radio network during cell selection or reselection procedure.

39. A network element in a radio access network terminating radio resource control protocol establishing a radio bearer between the network element terminating radio resource control protocol and a mobile terminal, the network element comprising:
a transmitter for signaling to at least one mobile terminal set of identifiers comprising at least one available radio network temporary identifier for identification of a mobile terminal,
a reception unit for receiving a connection setup request message from a mobile terminal at the network element terminating the radio resource control protocol in the radio access network, wherein the connection setup request message comprises a radio network temporary identifier selected by the mobile terminal from the set of identifiers and
a processing unit for establishing in response to the connection setup request message a radio bearer between the requesting mobile terminal and the network element terminating radio resource control protocol in a radio access network, wherein the selected radio network temporary identifier is utilized for identifying the mobile terminal in a communication on the established radio bearer.

40. The network element according to claim 39, further comprising means adapted to perform the method according to one of claims 2 to 4 or 8 to 22.

41. A network element in a radio access network terminating radio resource control protocol establishing a radio bearer between the network element terminating radio resource control protocol and a mobile terminal, the network element comprising:
a configuration unit for preconfiguring a pool of resources according to at least one set of radio bearer parameters describing individual radio bearers of a set of radio bearer configurations, wherein an individual radio bearer configuration is associated to a configuration identifier,
a transmitter for signaling to at least the mobile terminal information on the set of radio bearer configurations and the configuration identifiers associated to the individual radio bearers of said set,
a receiver for receiving a connection setup request message from a mobile terminal at the network element terminating the radio resource control protocol in the radio access network, wherein the connection setup request message comprises a configuration identifier of a radio bearer configuration selected by the mobile terminal and to be utilized for communication on the radio bearer to be established, and
a processing unit for establishing in response to the connection setup request message a radio bearer between the requesting mobile terminal and the network element terminating radio resource control protocol wherein the configuration of the established radio bearer is associated to the configuration identifier in the connection setup request message.

42. The network element according to claim 41, further comprising means adapted to perform the method according to one of claims 6 to 22.

43. A mobile terminal establishing a radio bearer between a network element in a radio access network terminating radio resource control protocol and the mobile terminal, the mobile terminal comprising:
a receiver for receiving from the radio access network a set of identifiers comprising at least one radio network temporary identifier available for identification of mobile terminals,
a processing unit for selecting a radio network temporary identifier from the set of identifiers, and
a transmitter for transmitting a connection setup request message to the network element terminating the radio resource control protocol in the radio access network, wherein the connection setup message comprises the selected radio network temporary identifier,
wherein the processing unit is adapted to establish a radio bearer between the requesting mobile terminal and the network element terminating radio resource control protocol in a radio access network, and
wherein the selected radio network temporary identifier is utilized for identifying the requesting mobile terminal in a communication on the established radio bearer.

44. The mobile terminal according to claim 43, further comprising means adapted to perform the method according to one of claims 23 to 26 or 29 to 38.

45. A mobile terminal establishing a radio bearer between a network element in a radio access network terminating radio resource control protocol and the mobile terminal, the mobile terminal comprising:
a receiver for receiving information on the set of radio bearer configurations and the configuration identifiers associated to the individual radio bearer configurations of said set from the radio access network,
a processing unit for selecting a radio bearer configuration associated to a configuration identifier from the set of radio bearer configurations, and
a transmitter for transmitting a connection setup request message to the network element terminating the radio resource control protocol in the radio access network, wherein the connection setup message a configuration identifier that is associated the selected configuration of radio bearer,
wherein the processing unit is adapted to establish a radio bearer between the requesting mobile terminal and the network element terminating radio resource control protocol in a radio access network using the selected radio bearer configuration.

46. The mobile terminal according to claim 45, further comprising means adapted to perform the method according to one of claims 27 to 38.

47. A mobile communication system comprising a network element according to one of claims 39 to 42 and one or more mobile terminals according to one of claims 43 to 46.
